# EUROPEAN PATENT SPECIFICATION

(11) **EP 2 241 186 B1**
(45) Date of publication and mention of the grant of the patent: **07.05.2014**
(21) Application number: 09700633.2
(22) Date of filing: 09.01.2009
(51) Int. Cl.: A01N 63/02, A01N 59/16, A01N 59/20, A01P 3/00, A01N 63/00

(54) **USE OF DISEASE RESISTANCE ENHANCER FOR PLANTS AND METHOD OF CONTROLLING PLANT DISEASE BY USING THE SAME**
VERWENDUNG VON PFLANZENMITTEL FÜR ERHÖHTE BEFALLSRESISTENZ UND VERFAHREN ZUR PFLANZENBEFALLSBEKÄMPFUNG DAMIT
UTILISATION D`AGENT AMÉLIORANT LA RÉSISTANCE À LA MALADIE POUR DES PLANTES ET PROCÉDÉ DE LUTTE CONTRE UNE MALADIE DE PLANTE À L'AIDE DE CELUI-CI

(30) Priority: 11.01.2008 JP 2008004833; 29.08.2008 JP 2008221563
(43) Date of publication of application: 20.10.2010
(73) Proprietor: Ajinomoto Co., Inc., Tokyo 104-8315 (JP)
(72) Inventor: IGARASHI, Daisuke, Kawasaki-shi Kanagawa 210-8681 (JP); TAKEDA, Taito, Kawasaki-shi Kanagawa 210-8681 (JP); ISHIZAKI, Takashi, Kawasaki-shi Kanagawa 210-8681 (JP); TOTSUKA, Kazuhiko, Kawasaki-shi Kanagawa 210-8681 (JP)
(74) Representative: HOFFMANN EITLE
(86) International application number: PCT/JP2009/050216
(87) International publication number: WO 2009/088074

(56) References cited:
- CN-A- 1 596 658
- JP-A- 6 080 530
- JP-A- S5 276 427
- JP-A- S5 341 423
- JP-A- 2007 070 292
- JP-A- 2007 077 065
- JP-T- 2007 530 032
- BRITZ-MCKIBBIN PHILIP ET AL: "Picomolar analysis of flavins in biological samples by dynamic pH junction-sweeping capillary electrophoresis with laser-induced fluorescence detection", ANALYTICAL BIOCHEMISTRY, ACADEMIC PRESS INC, NEW YORK, vol. 313, no. 1, 1 February 2003 (2003-02-01), pages 89-96, XP009170393, ISSN: 0003-2697, DOI: 10.1016/S0003-2697(02)00510-9 [retrieved on 2003-01-15]

### SEQUENCE LISTING

<110> Ajinomoto Co., Inc.
<120> DISEASE RESISTANCE ENHANCER FOR PLANTS AND METHOD OF CONTROLLING PLANT DISEASE
   BY USING THE SAME
<130> C983-C8361
<150> JP2008-004833
   <151> 2008-01-11
<150> JP2008-221563
   <151> 2008-08-29
<160> 4
<170> PatentIn version 3.3
<210> 1
   <211> 20
   <212> DNA
   <213> Artificial sequence
<220>
   <223> primer
<400> 1
   ccccttgtgt gtgacaatgg 20
<210> 2
   <211> 15
   <212> DNA
   <213> Artificial sequence
<220>
   <223> primer
<400> 2
   ccctgggcgc atcgt 15
<210> 3
   <211> 20
   <212> DNA
   <213> Artificial sequence
<220>
   <223> primer
<400> 3
   ggagcaggag aagatgatcg 20
<210> 4
   <211> 20
   <212> DNA
   <213> Artificial sequence
<220>
   <223> primer
<400> 4
   ttcttctcac atgcgaccac 20

## Description

### Technical Field

The present invention relates to the use of a disease resistance enhancer for plants produced by using a microorganism as a raw material, which is environmentally friendly and is safe for users and consumers. The present invention also relates to a method for controlling plant diseases.

### Background Art

In order to control crop diseases, besides pesticides, such as bactericides, which control plant diseases by directly acting on plant pathogens, pesticides (resistance induction type pesticides) which control the crop diseases by enhancing plants intrinsic disease resistance are used. Among the type of the pesticides such as bactericides which are directly acting on the plant pathogens, many of them exhibit bactericidal effects against pathogens. Yet, continuous use of those often causes emergence of a mutant resistant to the pesticide agents. On the other hand, the resistance induction type pesticides do not directly act on the pathogens and, instead control infection of diseases by inducing resistance of the plant Hence, no cases are reported so far where mutants resistant to this type of the pesticides emerged. Further, because the resistance induction type pesticides have less bactericidal action against organisms, it has been thought that burdens to environment including organisms other than plants are relatively small.

As pesticides for the purpose of the plant disease resistance induction, Probenazole (trade name: Oryzemate), Benzothiazole (BTH)-based Acibenzolar S-methyl (ASM, trade name: Bion), thiadiazole carboxamide-based tiadinil (trade name: V-GET) are thus far on the market.

In addition, as disease resistance induction substances derived from natural materials, polysaccharide decomposition products (Patent Document 1), cerebrosides (Patent Document 2, Patent Document 3 and Non-patent Document 1), jasmonic acid (Patent Document 4 and Non-patent Document 2), chitin oligosaccharides (Non-patent Document 3), β-1,3 and β-1,6-glucan oligosaccharides (Non-patent Document 4, Non-patent Document 5 and Non-patent Document 6), cholic acid (Patent Document 5 and Non-patent Document 8 ), peptide glycan (Non-patent Document 9), lipopolysaccharide (Non-patent Document 10) and the like have been reported. These substances are called elicitors and known to have effects including accumulation of phytoalexins which have an antimicrobial activity against pathogens, accumulation ofPR proteins (Pathogenesis-relatad proteins) such as chitinase and β-1,3-glucanase which digest the cell walls of the pathogens and induction of hypersensitive cell death (Non-patent Document 3 and Non-patent Document 7).

Further, a method for controlling infection of pathogens by spraying supernatant of a proline fermentation solution by *Corynebacterium* has been known (Patent Document 6). Yet, an effect of a solution obtained by heat-treating microorganisms under acidic conditions has not been known.
PatentDocument 1: JP 5-331016A
PatentDocument2: JP2846610B
PatentDocument 3: WO 98/47364
Patent Document4: JP 11-29412A
Patent Document5: JP 2006-219372A
PatentDocument6: JP 6-80530A
Non-patentDocument1: Koga J. et. al., J. BioL Chem.,1998, 48, 27, p.31985-31991
Non-patent Document 2: Nojiri H. et. al., Plant Physiol., 1996, 110, p.387-392
Non-patent Document 3: Yamada A. et. al., Biosci. Biotech. Biochem., 1993, 57, 3, p.405-409
Non-patent Document 4: Sharp J. K. et al., J. Biol. Chem., 1984, 259, p.11312-11320
Non-patent Document 5: Sharp J. K. et. aL, J. Biol. Chem., 1984, 259, p.11321-11336
Non-patent Document 6: Yamaguchi T. et. al., Plant Cell, 2000, 12, p.817-826
Non-patent Document 7: Keen N. T., Plant Mol. Biol., 1992, 19, p.109-122
Non-patent Document 8: Koga J. et. al., Plant Physiol. 2006,140, p.1475-1483
Non-patent Document 9: Gust A. A. et. al., J. Biol. Chem., 2007, 2007 in press
Non-patent Document 10: Newman M,.A, Plant J. 2002,29, p.487-495.

### Disclosure of the Invention

An object of the present invention is, in the light of the above-mentioned background, to provide the use of a disease resistance enhancer for plants, which is safe for consumers and users, and inexpensive, as well as to provide a method for controlling plant diseases using such an enhancer.

The present inventors, while searching for a disease resistance induction substance, discovered that an extract obtained by heat-treatment of microorganisms in an acidic solution had a high disease resistance induction activity. That is, they observed that treatment with the extract to plants induced the production of reactive oxygen, an increase in chitinase activity and glucanase activity, and found that significant disease resistance induction was triggered. Further, they found the extract had a strong control effect against infection of rice blast and *Brassicaceae Pseudomonas syringae* pv. *maculicola.* The present inventors also found that addition of a metal such as zinc and/or copper further increased the disease resistance induction by the extract or maintain the effect for a longer time. Based on the above findings, the present invention was completed.

The present invention provides the following:
(1) Use of a composition comprising a microbial cell extract, wherein said extract is obtained by heat treatment of cells of a microorganism in an acidic solution, as a disease resistance enhancer for plants.
(2) Use according to (1), wherein said heat treatment in an acidic solution is heat treatment at 70°C or higher in a solution having a pH of 6 or less.
(3) Use according to (1) or (2), wherein said microorganism is selected from the group consisting of *Escherichia* bacteria, Coryneform bacteria, *Pantoea* bacteria, *Bacillus* bacteria, yeast, lactic acid bacteria and acetic acid bacteria.
(4) Use according to any one of (1) to (3), wherein the disease resistance enhancer is a foliar spray agent.
(5) Use according to any one of (1) to (4) wherein said composition further contains a metal.
(6) Use according to (5), wherein said metal is zinc and/or copper.
(7) A method for controlling a plant disease comprising treating a plant with the disease resistance enhancer according to any one of (1) to (6).

### Brief Description of the Drawings

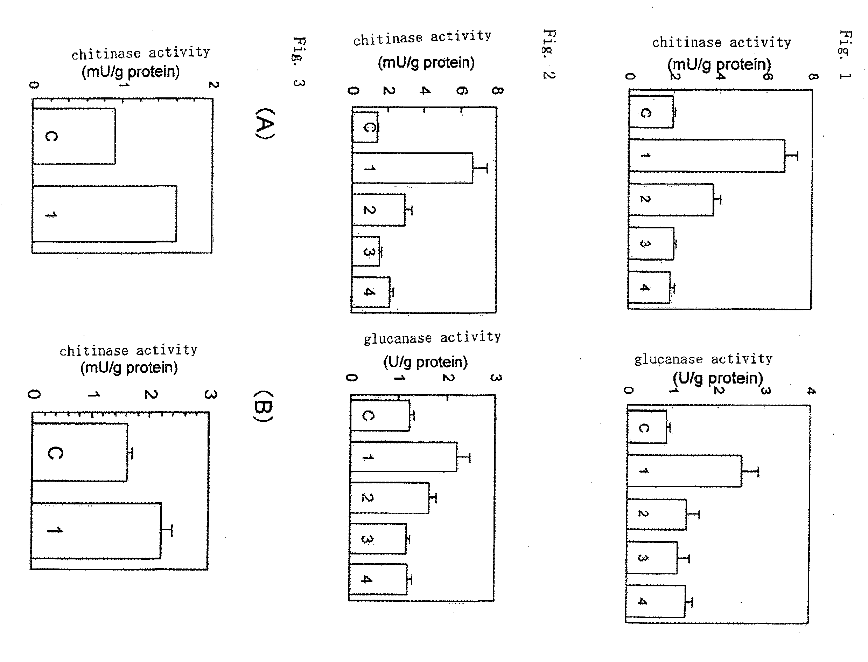

[Figure 1] Figure 1 shows the effect of a treated solution of *Corynebacterium* on the chitinase activity or glucanase activity of *Arabidopsis thaliana*. The activity is shown when a control (a group where a spreading agent alone was sprayed onto leaves) (C), an acidic heat-treated solution of *Corynebacterium* (1), a heat-treated solution of *Corynebacterium* without pH adjustment (pH 6.3) (2), or an untreated solution of *Corynebacterium* (pH 6.3) (3) was sprayed onto leaves.
[Figure 2] Figure 2 shows the effect of a treated solution of *E. coli* on a chitinase activity or glucanase activity of *Arabidopsis thaliana.* The activity is shown when a control (a group where a spreading agent alone was sprayed onto leaves) (C), an acidic heat-treated solution of *E. coli* (1), a heat-treated solution of *E. coli* without pH adjustment (pH 6.3) (2), or an untreated solution of *E. coli* (pH 6.3) (3) was sprayed onto leaves.
[Figure 3] Figure 3 shows the effect of a treated solution of *Bacillus* (A) or *Pantoea* (B) on a chitinase activity of *Arabidopsis thaliana.* The activity is shown when a control (a group where a spreading agent alone was sprayed onto leaves) (C) or an acidic heat-treated solution (1) was sprayed onto leaves.

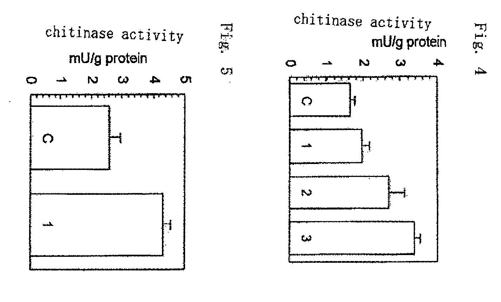

[Figure 4] Figure 4 shows the effect of a treated solution of *Corynebacterium* on a chitinase activity of *Arabidopsis thaliana.* The activity is shown when a control (a group where a spreading agent alone was sprayed onto leaves) (C), a suspension of *Corynebacterium* cells (pH 6) (1), a solution where the suspension of *Corynebacterium* cells (pH 6) was heat-treated at 75°C for 60 minutes (2), or a solution where the suspension of *Corynebacterium* cells (pH 6) was heat-treated at 95°C for 60 minutes (3) was sprayed onto leaves. In this experiment, the effect of the heat treatment was examined using a solution where the treated solution of bacterial cells was diluted 10-fold
[Figure 5] Figure 5 shows the effect of a treated solution of activated sludge on a chitinase activity of *Arabidopsis thaliana.* The activity is shown when a control (a group where a spreading agent alone was sprayed onto leaves) (C) or a 20-fold diluted treated solution of activated sludge (1) was sprayed onto leaves.

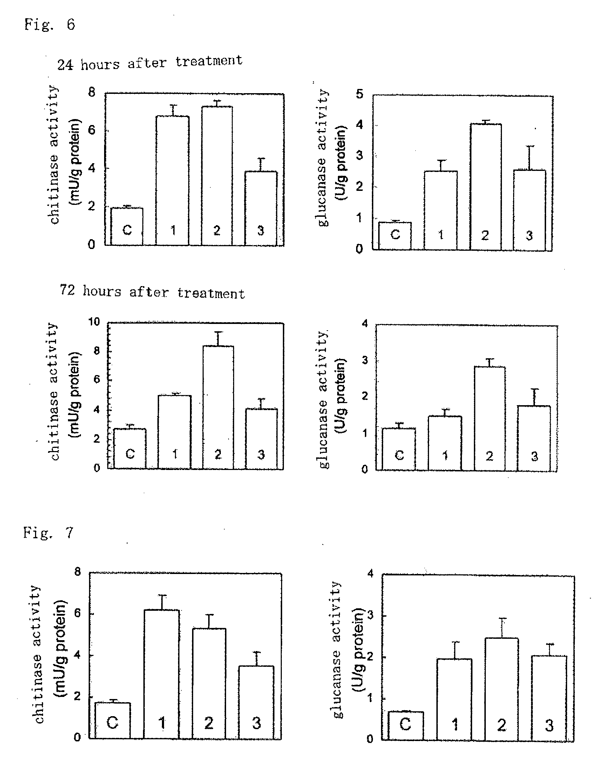

[Figure 6] Figure 6 shows the effect of a treated solution of *Corynebacterium* and zinc on a chitinase activity or glucanase activity of *Arabidopsis thaliana.* The activity is shown when a control (a group where a spreading agent alone was sprayed onto leaves) (C), an acidic heat-treated solution of *Corynebacterium* (1), an acidic heat-treated solution of *Corynebacterium* + zinc (0.01% w/v) (2), or zinc (0.01% w/v) (3) was sprayed onto leaves. The upper charts indicate the results at 24 hours after the treatment and the lower charts indicate the results at 72 hours after the treatment.
[Figure 7] Figure 7 shows the effect of a treated solution of *E. coli* and zinc on a chitinase activity or glucanase activity of *Arabidopsis thaliana.* The activity is shown when a control (a group where a spreading agent alone was sprayed onto leaves) (C), an acidic heat-treated solution of *E. coli* (1), an acidic heat-treated solution of *E. coli* + zinc (0.01% w/v) (2), or zinc (0.01% w/v) (3) was sprayed onto leaves.

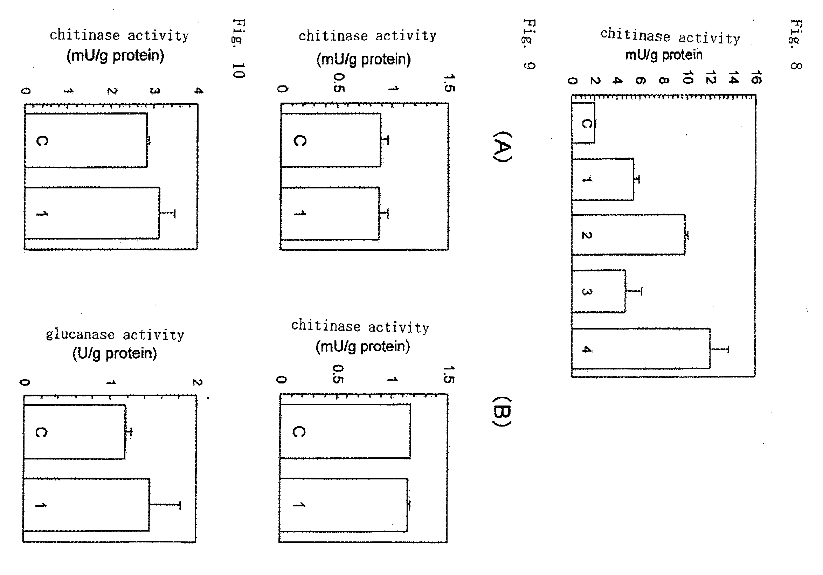

[Figure 8] Figure 8 shows the effect of a treated solution of *Corynebacterium* or *E*. *coli* and copper on a chitinase activity of *Arabidopsis thaliana.* The activity is shown when a control (a group where a spreading agent alone was sprayed onto leaves) (C), an acidic heat-treated solution of *Corynebacterium* (1), an acidic heat-treated solution of *Corynebacterium* + Cu (0.01% w/v) (2), an acidic heat-treated solution of *E. coli* (3), or an acidic heat-treated solution of *E. coli* + Cu (0.01% w/v) (4) was sprayed onto leaves.
[Figure 9] Figure 9 shows the effect of peptide glycan (A) or LPS (B) on a chitinase activity of *Arabidopsis thaliana.* The activity is shown when a control (a group where a spreading agent alone was sprayed onto leaves) (C), peptide glycan (100 mg/L) (1 in (A)) or LPS (100 mg/L) (1 in (B)) was sprayed onto leaves.
[Figure 10] Figure 10 shows the effect of supernatant ofa proline fermentation solution (amino acid 50 ppm) on a chitinase activity or glucanase activity of *Arabidopsis thaliana*. The activity was shown when a control (a group where a spreading agent alone was sprayed onto leaves) (C) or the supernatant of a proline fermentation solution (amino acid 50 ppm) (1) was sprayed onto leaves.

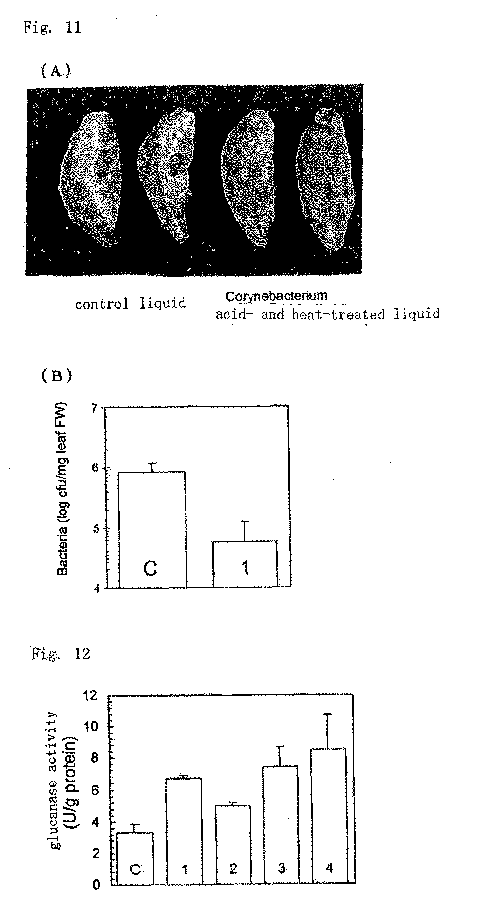

[Figure11] Figure 11 shows the control effect of an acidic heat-treated solution of *Corynebacterium* on infection of *Pseudomonas syringae* pv. *maculicola* to *Arabidopsis thaliana.* (A) is a photograph of leaves of *Arabidopsis thaliana.* Two leaves on the left are untreated (control) whereas two leaves on the right are infected with a pathogen after being pretreated with the acidic heat-treated solution of *Corynebacterium.* (B) is the colony forming unit per fresh weight of the leaf
[Figure 12] Figure 12 shows the effect of an acidic heat-treated solution of each microorganism on a chifinase activity of rice. The activity is shown when a control (a group where a spreading agent alone was sprayed onto leaves) (C), an acidic heat-treated solution of *Corynebacterium* (1), an acidic heat-treated solution of *E. coli* (2), an acidic heat-treated solution of *Pantoea* (3), or an acidic heat-treated solution of *Bacillus* (4) was sprayed onto leaves.

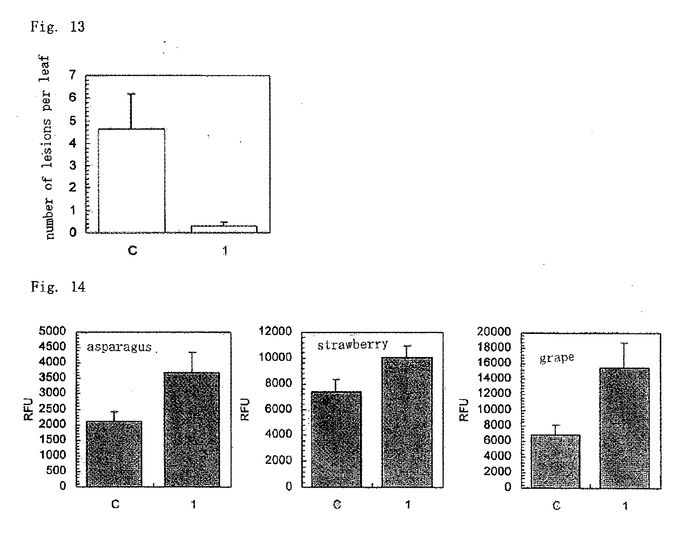

[Figure 13] Figure 13 shows a control effect of an acidic heat-treated solution of *Corynebacterium* on infection of rice blast. Pretreatment was done using a control (a group where spreading agent APPLAUCH BI (Kao Corporation) was sprayed) (C) or one where an acidic heat-treated solution of *Corynebacterium* was added in the spreading agent (1). The y-axis on the graph indicates the number of the lesions per leaf
[Figure 14] Figure 14 shows an amount of reactive oxygen (H₂O₂) generated by an acidic heat-treated solution of *Corynebacterium* in asparaguses, strawberries and grapes. Treatment was carried out onto leaves of each plant and the amount of the generated reactive oxygen was measured. Values are indicated in units of relative fluorescent units (RFU). The amount of the generated reactive oxygen is shown when a control (C) or a solution (100 ppm) (1) after an acidic heat-treated solution of *Corynebacterium* was subjected to molecular fractionation (not less than 5 kDa and not more than 30 kDa) was treated.

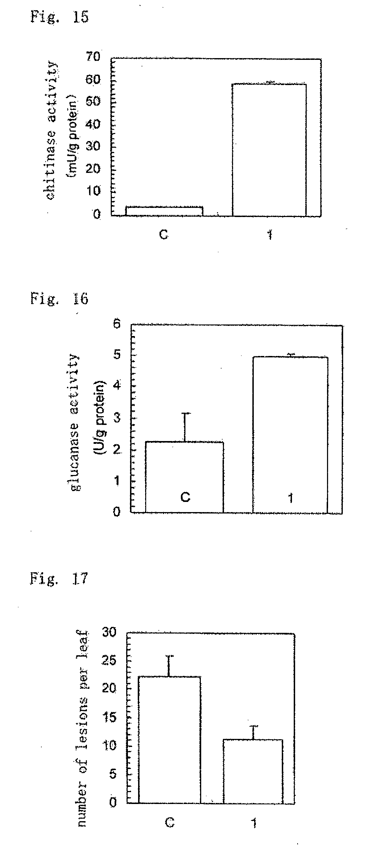

[Figure 15] Figure 15 shows the effect of an acidic heat-trsated solution of *Corynebacterium* on a chitinase activity of cabbage. The treated solution was injected into leaves of cabbage cultivated for 3 weeks after seeded. A chitinase activity at 48 hours later was measured. The activity is shown when a control (C) or an acidic heat-treated solution of *Corynebacterium* (1) was treated.
[Figure 16] Figure 16 shows the effect of an acidic heat-treated solution of *Saccharomyces cerevisiae* on a glucanase activity of rice. The activity is shown when a control (C) or an acidic heat-treated solution of *Saccharomyces cerevisiae* (1) was treated.

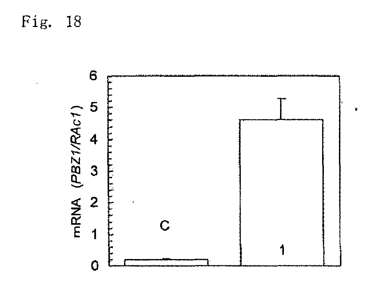

[Figure 17] Figure 17 shows the control effect of an acidic heat-treated solution of *Saccharomyces cerevisiae* on infection of rice blast. Pretreatment was done using a control (a group where spreading agent APPLAUCH BI (Kao Corporation) was sprayed) (C) or one where an acidic heat-treated solution of *Saccharomyces cerevisiae* was added in the spreading agent (1). The ordinate of a graph indicates the number of the lesions per leaf [Figure 18] Figure 18 shows the effect of inducing expression of disease resistance gene by treatment of rice roots with an acidic heat-treated solution of bacterial cells. The expression amount of *PBZ1* gene normalized with the expression amount of RAc1 is shown when a control (C) or an acidic heat-treated solution of *Corynebacterium* (1) was treated.

### Preferred Embodiments of the Invention

In the present invention, microorganisms can be eukaryotes such as yeast or fungi, or prokaryotes such as bacteria or actinomycetes, and can be either gram-positive or gram-negative. Preferably, Coryneform bacteria, the *Bacillus* bacteria, the *Escherichia* bacteria, the *Pantoea* bacteria, lactic acid bacteria, acetic acid bacteria, yeast or the like can be used.

Examples of Coryneform bacteria include the *Corynebacterium* bacteria such as *Corynebacterium acetoacidophilum, Corynebacterium acetoglutamicum, Corynebacterium alkanolyticum, Corynebacterium ammoniagenes, Corynebacterium callunae, Corynebacterium glutamicum, Corynebacterium lilium, Corynebacterium melassecola, Corynebacterium thermoaminogenes* or *Corynebacterium harculis*; the Brevibacterium bacteria such as *Brevibacterium divaricatum, Brevibacterium flavum, Brevibacterium immariophilum, Brevibacterium lactofermentum, Brevibacterium roseum, Brevibacterium saccharolyticum, Brevibacterium thiogenitalis, Brevibacterium album* or *Brevibacterium cerinum*; and the Microbacterium bacteria such as *Microbacterium ammoniaphilum.*

An example of *Escherichia* bacteria includes *Escherichia coli* (*E coli*).

An example of *Pantoea* bacteria includes *Pantoea ananatis.*

Examples of *Bacillus* bacteria include *Bacillus subtilis, Bacillus amyloliquefaciens* and *Bacillus pumilus.*

Examples of yeast include *Saccharomyces* yeast such as *Saccharomyces cerevisae; Pichia* yeast such as *Pichia pastoris*; *Hansenula* yeast such as *Hansenula polymorpha*; *Candida* yeast such as *Candida utilis*; and *Schizosaccharomyces* yeast such as *Schizosaccharomyces pombe.*

Examples of lactic acid bacteria include *Lactobacillus* bacteria such as *Lactobacillus casei,* Lactococcus bacteria such as *Lactococcus lactis* and *Bifidobacterium* bacteria such as *Bifidobacterium bifidum.*

An example of acetic acid bacteria includes *Acetobacter* bacteria such as *Acetobacter aceti.*

In the present invention, acidic heat-treatment can be carried out by heat-treatment in an acidic solution having preferably a pH of 6 or less, more preferably a pH of 5 or less, further preferably a pH of 4 or less, particularly preferably a pH of 3 or less. The lower limit is a pH of 1. The heating conditions are not limited but are generally carried out in the range of 70°C-200°C. It is preferable that the heat treatment be carried out preferably at 75°C or higher, more preferably 90°C or higher, further preferably 100°C or higher, particularly preferably 120°C or higher. The heating can be carried out usually for 1 to 120 minutes, preferably for 10 to 60 minutes.

It is preferable that the heating be carried out after suspending the microbial cells in water, a buffer or a medium and then acidifying the resulting suspension. Also, the heating may be carried out after acidifying the culture medium containing the microbial cell upon completion of the culture. For instance, the heating may be carried out after acidifying the culture medium (fermentation solution) containing the microbial cells, when the microbial cells were used to produce substances such as amino acids by fermentation. Further, the heating may be carried out after suspending an organic sludge containing microorganisms or the like in water or buffer and acidifying the resulting suspension. Examples of the organic sludge include sewage sludge discharged from a common sewage treatment facility, sludge discharged from a biological treatment apparatus for various organic wastewater, as well as excess sludge and dewatered products thereof. When the acidic heat-treatment is carried out, it is preferable that the microbial cells be suspended at a concentration of 50 mg-200 g (dry weight)/L.

An extract obtained by acidic heat-treatment of a microorganism (hereinafter referred to as acidic heat-treated solution) can be used as a disease resistance enhancer after removal of bacterial cells by centrifugation, membrane separation or the like, or can be used while containing the bacterial cells.

The application concentration of the disease resistance enhancer of the present invention can be adjusted by diluting or concentrating to an appropriate concentration depending on the type of plants, the growth stage of the plant or the method of application. In addition, a fraction resulting from fractionation by molecular weight can be used.

The activity to induce plant disease resistance can mean a series of reactions represented by production of reactive oxygen, accumulation of antibacterial proteins and antibacterial compounds, strengthening of the cell wall and accumulation of bactericidal enzymes, such as chitinase and glucanase. When infected by bacteria, filamentous bacteria, or the like, plants often trigger the above series of reactions to control the spread of the infection. The activity can be evaluated by measuring enzymatic activity of chitinase or glucanase and measuring the reactive oxygen according to the methods described in the Examples section of this description. In addition, the evaluation can be carried out by examining an amount of expression of a disease resistance-related gene such as *PBZ1* gene using RT-PCR or the like.

Examples of a method for applying a disease resistance enhancer of the present invention include spraying a plant body (foliar spray agent or the like), spreading treatment, dipping treatment for roots and mixing treatment to soil. Also, because the method for controlling plant diseases of the present invention mainly aims at preventing the diseases, it is preferable that the method be used prior to the outbreak of the disease. Yet, even after the outbreak of the disease, effects to block its spreading and to weaken the disease can be expected.

The disease resistance enhancer of the present invention may contain other ingredients. Examples of the other ingredients include metals such as zinc and copper. Although spraying the acidic heat-treated solution of microorganisms alone can exert the effect, addition of metal such as zinc and copper enhances or prolongs the effect. It is preferable that the concentration of the metal be in concentration range of 0.0001% - 10% (w/v) (for metal weight) at the time of the application. It is preferable that the metal such as zinc and copper be added to the disease resistance enhancer of the present invention in the form of salts so as to form ions in the solution

Crops subjected to the disease resistance enhancer of the present invention are not particularly limited and any general cultivated plants can be subjected. Examples thereof include the Poaceae plants (such as rice, barley, wheat, corn, oat or lawn grass), the Solanaceae plants (such as tomato, eggplant or potato), the Cucurbitaceae plants (such as cucumber, melon or pumpkin), the Leguminosae plants (such as pea, soybean, kidney bean, alfalfa, peanut, fava bean), the Brassicaceae plants (such as daikon radish, Chinese cabbage, cabbage, komatsuna, rape blossoms, bok choy or *Arabidopsis thaliana*), the Rosaceae plants (such as strawberry, apple or pear), the Moraceae (such as mulberry), the Malvaceae (such as cotton), the Umbelliferae (such as carrot, parsley or celery), the Liliaceae (such as green onion, onion or asparagus), the Compositae (such as burdock, sunflower, chrysanthemum, crown daisy, safflower, lettuce) and the Vitaceae (such as grape).

Since the reaction which gives rise to plant disease resistance is generally nonspecific to pathogens, all the plant diseases caused by fungus, bacteria and viruses are included as subject diseases. Examples thereof include diseases caused by *Magnaporthe grisea, Cochliobolus miyabeanus, Pseudomonas syringae* pv. *maculicola, Spongospora subterranea, Phytophthora infestans, Peronospora manshurica, Eryshiphe graminis* f. sp. hordei, *Eryshiphe graminis* f. sp. tritici, *Gibberella zeae*, *Mycosphaerella pinodes, Sclerotinia borealis*, *Puccinia recondita, Ustilago maydis, Ceratobasidium gramineum, Rhizoctonia solani, Rhizoctonia solani, Alternaria solani, Cercospora kikuchii, Fusarium oxysporum* f. sp. batatas, *Fusarium oxysporum* f sp. melonis, *Fusarium oxysporum* f. sp. lactucae, *Fusarium oxysporum* f. sp. lycopersici, *Fusarium oxysporum* f. sp. spinaciae, *Verticillium dahliae, Plasmodiophora brassicae, Pythium debaryanum, Botrytis cinerea, Colletotrichum phomoides, Hordeum vulgare, Pseudomas syringae* pv. syringae, *Erwiniasubsp. atroseptica, Xanthomonas campestris* pv. oryzae, *Streptomyces scabies,* Soil-borne wheat mosaic virus, Soybean mosaic virus, Alfalfa mosaic virus and Potato leafroll virus.

The disease resistance enhancer of the present invention can be used on plants in any forms such as solution, powder, granule, emulsion, wettable powder, oil, aerosol, flowable by mixing the acidic heat-treated solution of microorganisms with appropriate additives. Further, optionally, the pH thereof can be adjusted by adding buffer, and properties such as penetration properties to plants or spreading properties can be modified by adding a spreading agent, surfactant or the like.

The present invention will now be described concretely by way of examples thereof. But the present invention is not limited to the examples.

### EXAMPLES

### Example 1 Method for Preparing Disease Resistance Enhancer for Plants Derived from Microorganisms

*Escherichia coli, Corynebacterium glutamicum, Pantoea ananatis, Bacillus subtilis* or *Saccharomyces cerevisiae* was used as the microbial cells. Each type of bacterial cells of each was cultured to about 1.5-2.0 g (dry weight) per 100 mL of culture medium. For culturing, the medium described in JP 2005-278643, JP 2003-259861, WO01/090310 or the like was used.

The bacterial cells were collected by centrifugation at 6000 rpm, washed with water three times and then suspended in 100 ml of water per 1.5-2.0 g (dry weight). H₂SO₄ was added to adjust to a pH of 3.2 and then subjected to heat treatment using an autoclave at 121°C for 30 minutes. The resulting solution was centrifuged at 10,000 rpm to remove insoluble materials. The obtained supernatant was used in the experiments below as the "acidic heat-treated solution". Unless otherwise described, a 100-fold diluted solution was used to treat plants.

### Example 2 Evaluation of Plant Disease Resistance Induction Using Enzymatic Activity as Index

### (1) Method of Cultivation of Plant and Spraying

Cultivation on agar of *Arabidopsis thaliana* was carried out in medium containing OptMS inorganic salt culture medium (Table 1) supplemented with 1 % sucrose and 0.8 % agar, Plants cultivated for 2 weeks were used. The cultivation was carried out with a diurnal cycle of the light period of 16 hours at the light intensity of about 70 µmol m⁻²s⁻¹. For cultivation on rock wool of *Arabidopsis thaliana,* rock wool of 5 cm square (manufuctured by Nittobo, size V) was used. As a fertilizer, OptMS inorganic salt culture medium (Table 1) was used The cultivation was carried out with a diurnal cycle of the light period of 14 hours at light intensity of about 100 µmol m⁻²s⁻¹ for 21 days. Among aerial parts, all but leaf petioles were used as samples. Spraying effects of each solution were evaluated for a plant cultivated on the agar medium or rock wool. Unless otherwise described, the plant was treated with a 100-fold dilution of the solution prepared by the method described in Example 1 to measure the enzymatic activity in leaves 24 hours after the treatment. A 1000-fold diluted concentration of APPLAUCH BI (Kao Corporation) was added as a spreading agent to the spray solution.

**[Table 1]**

| | |
|---|---|
| KPO₄ (pH5.7) | 2.5 mM |
| MgSO₄ | 2 mM |
| Ca(NO₃)₂ | 3 mM |
| NH₄NO₃ | 2.5 mM |
| KNO₃ | 2 mM |
| KCl | 2 mM |
| | |

| micro nutrients | |
|---|---|
| Fe(III)-EDTA | 0.1 mM |
| MnCl₂ | 0.1 mM |
| CuSO₄ | 0.5 µM |
| ZnSO₄ | 30 µM |
| NaMoO₄ | 1 µM |
| CoCl₂ | 0.1 µM |
| H₃BO₃ | 0.1 mM |
| NaCl | 10 µM |

### (2) Extraction of Enzyme

Immediately after the plant was sampled for measurement of the enzymatic activity, the samples were frozen with liquid nitrogen and stored at -80°C. The frozen samples were disrupted using plant Mixer Mill MM300 (QIAGEN) and dissolved in 500 uL of an extraction buffer [100 mM Na₃PO₄ (pH 6.0), 1 mM DTT, protease inhibitor/complete mini EDTA free (Roche)]. After centrifugation at 10,000 rpm for 5 minutes, the supernatant was passed through a 0.22 µm filter to remove insoluble materials. The resulting solution was passed through an ultrafiltration filter UFV5BG00 (Millipore) to further concentrate and desalt. Desalting was performed by passing 1.5 ml of the extraction buffer three times. The thus obtained fraction was used as a crude extract fraction, which was subjected to measurement of protein concentration by Bradford method and then used for measurement of enzymatic activity.

### (3) Measurement of Chitinase Activity

The chitinase activity was determined by the method by McCreath et al. (J. Microbiol. Methods 14:229-1992). A substrate 4MU-(GlcNAc)₃ (SIGMA M5639) was dissolved in 50% ethanol to a final concentration of 0.4 mM and stored at -20°C. When used, it was diluted 10-fold to obtain a substrate solution. The crude extract solution was adjusted to 6-8 µg/µL and 50 µL of the solution was used for the reaction. After preincubation on a 96-well plate at 37°C for 10 minutes, 50 µL of the substrate solution was added and the reaction was started at 37°C. 30 minutes and 150 minutes after the start of the reaction, 100µL of 1 M Gly/NaOH buffer (pH 10.2) was added to the reaction mixture to terminate the reaction. The reaction and termination were carried out on a 96-well plate with a final volume of 200 µL. Bubbles on the solution surface were completely removed and the fluorescence intensity was then measured using a plate reader for fluorescence detection (WALLAC 1420 ARVO-SX). Measurement of fluorescence was performed employing 360 nm for excitation and 450 nm for emission. The reaction amount was based on a standard value determined using 4-MU (methylumbelliferone) as a substrate, and the amount of enzyme which reacted with 1 µmol for 1 minute was defined as 1 unit.

### (4) Measurement of Glucanase Activity

Measurement of a glucanase activity in *Arabidopsis thaliana* was carried out in accordance with the method by Aono et al. (Appl Environ Microbiol. 58:520- 1992). A method for breaking up laminarin which is a soluble polysaccharide was employed. A substrate, laminarin (SIGMA L9634) was dissolved in sterilized water to a final concentration of 5 mg/ml and stored at -20°C. The crude extract solution was adjusted to 6-8 µg/µL and 50 µL of the solution was added to 50 µL of the substrate solution to initiate the reaction at 37°C. 180 minutes and 360 minutes after the start of the reaction, 100 µL of the reaction mixture was added to 500 µL of DNS solution (5 g/L dinitrosalicylic acid, 16 g/L NaOH, 300 g/L potassium sodium tartrate tetrahydrate) and the mixture was heated at 98°C for 10 minutes and then rapidly cooled on ice to develop color. The DNS method was carried out by the method by Miller et al. (Anal Chem 31:426-1959). After the coloring, the activity was determined based on absorbance at 540 nm. The reaction amount was based an a standard value determined using glucose as a substrate, and the amount of enzyme which reacted with 1 µmol for 1 minute was defined as 1 unit.

The results of the evaluation of the plant sprayed with the acidic heat-treated solution of *Corynebacterium* cells are shown in Figure 1. Compared with bacterial cells which were subjected to only heat or acid treatment, spraying the solution subjected to heat and acid was found to drastically increase the chitinase/glucanase activity. The results of the evaluation carried out using *E. coli* cells are shown in Figure 2. Similar to the evaluation with *Corynebacterium,* the heat-treatment under acidic conditions resulted in very effective extraction of substances that induce disease resistance. Similarly, heat-treated solutions of *Pantoea* or *Bacillus* cells under acidic conditions were evaluated. As shown in Figure 3, in both cases, an increase in the chitinase activity was observed, indicating both had the effect of inducing disease resistance.

The results of the evaluation of a plant sprayed with the acidic heat-treated solution of *Corynebacterium* cells, which was obtained by heat treatment in a solution with pH 6 are shown in Figure 4. As a result, even with the solution obtained by heating at pH 6 and 75°C, an increase in the chitinase activity was observed, indicating the solution had the effect of inducing disease resistance.

In addition, excess sludge produced from an activated sludge treatment apparatus for industrial effluent containing, as a major ingredient, amino acid fermentation waste was dewatered. The resulting sludge was added with an aqueous H₂SO₄ solution, adjusted to pH 3.2 and then subjected to a heat treatment of 121°C for 20 minutes. The obtained solution was then centrifuged at 10,000 rpm and the insoluble ingredients were removed The results using this supernatant as the acidic heat-treated solution are shown in Figure 5. As a result, it was found that the acidic heat-treated solution of microorganisms contained in the excess sludge also had the effect of inducing disease resistance.

From these results, it was found that treating various microbial cells with heat under acidic conditions resulted in the extraction of substances that induce the disease resistance.

Figures 6 and 7 show experiments where ZnSO₄ was mixed in the spray solution to a weight ratio of Zn of 0.01 %. When comparing the acidic heat-treated solution of bacterial cells alone or Zn alone, the increase in the enzymatic activity was stronger with the combination of the acidic heat-treated solution of bacterial cells with Zn. This effect was observed both in *Corynebacterium* (Figure 6) and *E. coli* (Figure 7) cells and in particular the effect on the glucanase activity was significant. Further, the effect at 72 hours was more significant than that at 24 hours after the treatment, indicating that the addition of Zn was effective to sustain the effect for a long time.

The results of the evaluation with CuSO₄ mixed in the spray solution to a weight ratio of Cu of 0.01% are shown in Figure 8. As a result, when Cu was added to various acidic heat-treated solutions of bacterial cells, the increase in the enzymatic activity was even greater.

### Comparative Example Comparison with Effects of Known Substance which Induce Disease Resistance

It has been previously reported that peptide glycan and lipopolysaccharide (LPS), which make up bacterial cell walk, were recognized by plants and induced disease resistance. The effects of these known inducers were compared to those described above. A standard sample of peptide glycan manufactured by InvivoGen (PGN-ECndss ultrapure) was used and a standard sample of lipopolysaccharide manufactured by Sigma (L8643) was used. Each of these samples was sprayed onto leaves of *Arabidopsis thaliana* at the reported effective concentration of 100 mg/L, and 24 hours later an enzymatic activity was measured. As shown in Figure 9, no increase in chitinase activity was observed. It was thus found that the effect of inducing disease resistance with the acidic heat-treated solution of bacterial cells was sprayed onto the leaves was significantly stronger than that induced by those substances.

Also, it had been previously reported that spraying a supernatant of a proline (Pro) fermentation solution can control infection of pathogens (JP 6-80530). Therefore, this was examined and compared to the acidic heat-treated solution of bacterial cells of the present application. Pro producing bacterial cells (*Corynebacterium glutamicum* ATCC21159) were cultured by a method described in JP 6-80530. Amino acids were analyzed using an amino acid analyzer (Hitachi, Ltd., L-8800). To treat plant bodies, a solution diluted such that the total amount of amino acids was 50 ppm was used. As shown in Figure 10, no significant increase in the enzymatic activity was observed when the supernatant of the Pro fermentation solution was sprayed onto the leaves.

### Example 3 Effect for Controlling Infection of Pseudomonas syringae pv. maculicola in Arabidopsis thaliana

A pathogen, *Pseudomonas syrinagae* pv. *maculicola* was cultured in YEP medium for 24 hours. After the culturing, bacterial cells were collected at 3,000 rpm and suspended in 10 mM MgSO₄ solution to 5x10⁶ cfu/mL. The bacterial cell suspension was infiltrated into leaves with a 1 mL syringe without a needle for infection. Three days later, it was confirmed that the leaves were infected.

In the test, pretreatment was carried out by spraying a spreading agent alone or spraying the spreading agent with an acidic heat-treated solution. 24 hours later, the pathogen was added. As shown in Figure 11, it was found that the infection was significantly inhibited with the spreading agent with the acidic heat-treated solution, compared with the spreading agent alone.

### Example 4 Disease Resistance Induction in Rice and Control Effect on Rice Blast Infection

### (1) Method of Cultivation of Rice and Spraying

Rice (variety: Nipponbare) seeds were immersed in water for three days to stimulate germination, seeded in molding for horticulture (4:1 mixture of Power Soil (Kanto Hiryou Industries (Kureha Chemical Industries)) and venniculite (S.K.Agri)) and cultivated in a green house. Cultivation took place for 14 days under natural light in the green house and a plant having a foliar age of 4.5 true leaves was used as a sample.

### (2) Measurement of Glucanase Activity

Glucanase activity in rice was measured by the method of Inui et al. (Biosci Biotechnol Biochem. 61:975-1997). 2 µL of the sample (acidic heat-treated solution) was placed on each of ten sites on the surface of the fourth true leaf of a plant having a foliar age of 4.5 true leaves. The leaf was frozen 24 hours later using liquid nitrogen and subjected to homogenization extraction. To 100 µL of the crude extract solution, 900 µL of the substrate solution (1% Curdlan (SIGMA C7821), 50mM Na₂HPO₄-citric buffer, (pH5.0)) was added to initiate a reaction at 37°C. 60 minutes after the beginning of the reaction, 50 µL of the reaction mixture was added to 200 µL of DNS solution (5 g/L dinitrosalicylic acid, 16 g/L NaOH, 300 g/L potassium sodium tartrate tetrahydrate) and the mixture was heated at 98°C for 10 minutes and then rapidly cooled on ice to develop color. The DNS method was carried out according to the method of Miller et al. (Anal Chem 31:426-1959). After the coloring, the activity was determined based on absorbance at 540 nm. The reacting amount was based on a standard value determined using glucose as a substrate, and the amount of enzyme which reacted with 1 µmol for 1 minute was defined as 1 unit.

The rice was treated with the solution of *Corynebacterium* cells which was heat-treated under acidic conditions, which solution was prepared in accordance with the method described in Example 1 and applied without being diluted, and the glucanase activity was measured after 24 hours. As shown in Figure 12, it was shown that the glucanase activity is significantly increased by spraying the acidic heat-treated solution of the bacterial cells, compared with the control.

### (3) Control Effect on Rice Blast Infection in Rice

A sample of the acidic heat-treated solution of *Corynebacterium* cells prepared in accordance with the method described in Example 1 and diluted 10-fold was sprayed on an entire leaf of rice having a foliar age of 4.5 true leaves. After a 24-hour cultivation, a conidial suspension (1×10⁵ conidia/mL) of rice blast pathogen (scientific name: *Magnaporthe oryzae*) was sprayed to infect After spraying to infect, the sample was left to stand for 24 hours in a dark, humid room to infect with the rice blast pathogen. Six days after the infection, a preventive value was calculated by measuring the number of susceptible lesions that appeared on the fourth true leaf of each treatment group. The preventive value was calculated as follows: preventive value = (mean of the number of lesions in the control group - mean of the number of lesions in each group treated with a sample / mean of the number of lesions in the control group) × 100. As shown in Figure 13, it was found that, compared with the control group, the spraying of the acidic heat-treated solution of bacterial cells was able to significantly control pathogenic infection.

### Example 5 Evaluation of Disease Resistance Induction using the Production of Reactive Oxygen as an Index in Various Plants

Each plant was seeded in soil-Metromix (Hyponex Japan Co., Ltd.) and cultivated at a light intensity of about 100 µmol m⁻²s⁻¹ with a cycle of a 14-hour light period and a 10-hour dark period at 23 °C for 21 days. Fresh true leaves thereof were used for evaluation.

Measurement of reactive oxygen (H₂O₂) was carried out by a method modified from the method of Kunze et al. (Plant Cell, 16,3496- 2004). A 3mm square of the plant leaf was cut out, and immersed in sterilized water overnight. Then, the resulting samples were transferred to an aqueous solution containing an acidic heat-treated solution of each of the following bacterial cells (1. *Corynebacterium,* 2. *E coli,* 3. *Bacillus,* 4. *Pantoea*, 5. *Saccharomyces cerevisiae*) to generate H₂O₂. The aqueous solution was added to a reaction solution (50 mM phosphate buffer (pH 5.8), 5 µM Amplex Red (Invitrogen), 1 µg/mL horseradish peroxidase (Sigma Aldrich P8515) and the measurement was carried out at excitation 544 nm and emission 590 nm Each experiment was run through at least four repetitions and judged in accordance with the following criteria:

### (Method for judgment)

1)In each experiment, when the mean value increased not less than 5 fold as compared with the control, a score of +2 was assigned, and when the mean value increased not less than 2 fold as compared with the control, a score of+1 was assigned;
2) In each experiment, a significant test was carried out, and when the p value was <0.01, a score of +2 was assigned, and when the p value was < 0.05, a score of+1 was assigned;
3) The sum was divided by the number of the experiments, and a result of not less than 1 was indicated as "++" and a result of not less than 0.5 was indicated as "+)"

As shown in Table 2, generation of reactive oxygen was confirmed in various plants. It was therefore considered that disease resistance induction by the treatment of acidic heat-treated solution of bacterial cells was not species-specific.

Table 2 shows the results of the measurement of the generation of the reactive oxygen from the leaf specimen by acidic heat-treated solution of *Corynebacterium glutamicum* (1), *E. coli* (2), *Bacillus subtilis* (3), *Pantoea ananatis* (4) and *Saccharomyces cerevisiae* (5). Also, "n.d." means "not determined."

**[Table 2]**

| Scientific Name | Japanese Name | 1 | 2 | 3 | 4 | 5 |
|---|---|---|---|---|---|---|
| *Spinacia oleracea* | Hourensou | + | ++ | + | + | + |
| *Brassica rapa var. peruviridis* | Komatsuna | ++ | ++ | + | - | - |
| *Raphanus sativus* | Daikon | ++ | ++ | ++ | - | ++ |
| *Brassica oleracea var. capitata* | Kyabelu | ++ | ++ | ++ | - | n.d |
| *Brassica rapa var. chinensis* | Chingensai | ++ | ++ | ++ | + | ++ |
| *Brasslca rapa var. glabra Regel* | Hakusai | ++ | ++ | - | - | + |
| *Brassica rapa var. nippo-oleifera* | Nanohana | ++ | ++ | - | - | - |
| *Zoysia japonica* | Shiba | + | ++ | ++ | ++ | n.d |
| *Orvza sativa* | Inc | ++ | ++ | ++ | ++ | ++ |
| *Zea mays* | Toumorokoshi | - | + | ++ | ++ | ++ |
| *Triricum aestivum* | Komugi | + | ++ | + | ++ | ++ |
| *Cucumis sativus* | Kyuri | ++ | + | ++ | ++ | ++ |
| *Chrysanthemum coronarium* | Syungiku | ++ | ++ | ++ | - | n.d |
| *Lactuca sativa* | Retasu | ++ | ++ | ++ | ++ | ++ |
| *Carthamus tinctorius* | Benibana | - | ++ | ++ | ++ | ++ |
| *Allium cepa* | Tamanegi | ++ | ++ | ++ | + | ++ |
| *Pisum sativum* | Endou | + | ++ | - | - | - |
| *Glycine max* | Daizu | ++ | ++ | + | + | ++ |
| *Vicia faba* | Soramame | ++ | ++ | ++ | ++ | ++ |
| *Allium fistulosum* | Negi | ++ | ++ | ++ | + | ++ |

### Example 6 Evaluation of Disease Resistance Induction by the Production of Reactive Oxygen as an Index in Asparagus, Strawberries and Grapes

The measurement of reactive oxygen was carried out basically by the method described in Example 5. For asparagus, leaves were collected from the plants cultivated by the method described in Example 5 for one month and the generation of reactive oxygen was measured. For strawberries and grapes, young plants were purchased and acclimatized by cultivating for 2-to 3-weeks cultivation at 25°C in a green house. Then, healthy leaves were selected and collected and the generation of reactive oxygen was measured An acidic heat-treated solution of *Corynebacterium* fractionated to have a molecular weight of not less than 5 kDa and not more than 30 kDa by ultrafiltration was used for the treatment solution. In the ultrafiltration, an ultrafiltration filter (Amicon Ultra-15 centrifugal filter, 30K NMWL, 5K NMWL, Millipore) was used for molecular weight fractionation. The measurement was carried out using relative fluorescence intensity as a generated amount of reactive oxygen which was compared with the control. As shown in Figure 14, it was found that the above fractionated solution also induced significant generation of reactive oxygen during the treatment of asparaguses, strawberries and grapes

### Example 7 Effect of Treated Solution of Corynebacterium on Chitinase Activity in Cabbages

Cabbages were seeded in soil and cultivated for 3 weeks. Thereafter, the first true leaf was injected with a 10-fold diluted acidic heat-treated solution of *Corynebacterium.* 48 hours later, the chitinase activity was measured. The control group was subjected to a water treatment. As shown in Figure 15, compared with that of the control, the chitinase activity was significantly increased by spraying the acidic heat-treated solution of the bacterial cells.

### Example 8 Effect of Acidic Heat-Treated Solution of Saccharomyces cerevisiae on Rice

In accordance with the method described in Example 4, effects of acidic heat-treated solution of *Saccharomyces cerevisiae* on rice were examined by measuring an increase in glucanase activity and infection control effect As shown in Figure 16, it was found that spraying acidic heat-treated solution of *Saccharomyces cerevisiae* (2-fold dilution) significantly increased the glucanase activity. In addition, as shown in Figure 17, it was shown that spraying the acidic heat-treated solution of *Saccharomyces cerevisiae* (5-fold dilution) was able to control pathogenic infection significantly.

### Example 9 Induction of Expression of Disease Resistance Gene by Treatment of Rice Roots with Acidic Heat-Treated Solution of Bacterial Cells

A 1 mL tip filled with agar medium in which 0.8% Agar was added to OptMS inorganic salt culture medium (Table 1) was set on a tip rack. Sterilized rice seeds (variety: Koshihikari) were seeded in the medium. Part of the tip (about 20 mm and lower part from the bottom) was cut to allow the root to elongate. Cultivation was carried out for one week while the cut face was immersed in purified water to prevent drying. To rice seedlings grown on the tip, a styrene foam buoy with a thickness of 20 mm was attached. The tip with the buoy was then floated in a food container (C-AP Fruit 200, Chuo Kagaku Co., Ltd.) filled with 1 L of OptMS. The rice was cultivated under these conditions another week and rice having a foliar age of 4.5 true leaves, which had been cultured for two weeks in total, was used as the experimental material. A treated solution (100 mL) was put in the bottom of a Technopot (Sumitomo Bakelite Co., Ltd.) and the rice grown by hydroponics for 2 weeks was floated together with the styrene foam so that the root was sufficiently immersed in the treated solution. As a treated solution, an acidic heat-treated solution of *Corynebacterium* was used at a concentration of 20%. The size of the styrene foam was adjusted in advance so as to fit in Technopot. The cultivation was carried out in a constant-temperature plant incubator (Koitotron, Koito Industries, Ltd.) with a diurnal cycle of a 16-hour light period and a 8-hour dark period at a temperature of 28°C and a light intensity of about 150 µmol m⁻²s⁻¹. Fifteen hours after the root was treated, sampling was carried out. The entire root was used as one sample. Total RNA was extracted from each sample using RNeasy Plant Mini Kit (QIAGEN). After the total RNA was subjected to DNase treatment using RNase free DNase Set (QIAGEN), reverse transcription was carried out using a reverse transcriptase, High Capacity cDNA Reverse Transcription Kit (Applied Biosystems) from an oligo dT primer. Then, quantitative PCR was performed using the synthesized single-strand cDNA as the template. The quantitative PCR was carried out using ABI PRISM 7500 with the reaction conditions of 40 cycles of 95°C for 15 seconds and 60°C for 60 seconds. As a reagent, Power SYBR Green PCR Master Mix (Applied Biosystems) was used. For the genes to be quantified, RAc1 (RAP code, Os11g0163100) was used as a housekeeping gene and PBZ1 (RAP code, Os12g0555200) was used as a gene related to disease resistance. The following primers were used for expression of each gene: 5'-CCCCTTGTGTGTGACAATGG -3'(SEQ ID NO: 1) and 5'-CCCTGGGCGCATCGT- 3'(SEQ ID NO: 2)(RAc1), 5'-GGAGCAGGAGAAGATGATCG- 3'(SEQ ID NO: 3) and 5'-TTCTTCTCACATGCGACCAC- 3'(SEQ ID NO: 4) (PBZ1). The expression amount of *PBZ1* was normalized using the expression amount of *RAc1*. The results are shown in Figure 18. When the root was treated, it was found that the expression amount of the *PBZ1* gene increased in the root.

### Industrial Applicability

A disease resistance enhancer of the present invention can be readily obtained by heat-treatment in an acidic solution (acidic heat-treatment) of various microorganism cell residues after amino acid fermentation or the like, or microbial cells from organic sludge. Further, since the effect is seen at a low concentration (for example, acidic heat-treatment of 200 mg/L of bacterial cells in dry weight), a large amount can be readily prepared for a low cost.

It is known that, many pesticides such as bactericides act directly on plant pathogens, and exhibit bactericidal effects against pathogens. Yet, their continuous use often causes the emergence of a resistance mutant to the pesticide agent To the contrary, pesticides that induce resistance can be used over a long period of time with less possibility of the emergence of a drug resistance mutant. The acidic heat-treated solution of microbial cells prevents the infection of pathogens by inducing disease resistance rather than antibacterial activity, and thus there is less chance to generate a resistance mutant and it can be used over a long period of time, which means the disease resistance enhancer of the present invention is industrially very useful.

## Claims

1. Use of a composition comprising a microbial cell extract, wherein said extract is obtainable by heat treatment of cells of a microorganism in an acidic solution, as a disease resistance enhancer for plants.

2. The use according to claim 1, wherein said heat treatment in an acidic solution is heat treatment at 70°C or higher in a solution having a pH of 6 or less.

3. The use according to claim 1 or 2, wherein said microorganism is selected from the group consisting of *Escherichia* bacteria, Coryneform bacteria, *Pantoea* bacteria, *Bacillus* bacteria, yeast, lactic acid bacteria and acetic acid bacteria.

4. The use according to any one of claims 1 to 3, wherein said disease resistance enhancer is a foliar spray agent.

5. The use according to any one of claims 1 to 4, wherein said composition further contains a metal.

6. The use according to claim 5, wherein said metal is zinc and/or copper.

7. The use according to any one of claims 1 to 6, wherein the acidic solution has a pH of 1 to 6.

8. A method for controlling a plant disease comprising treating a plant with a disease resistance enhancer comprising a microbial cell extract, wherein said extract is obtainable by heat treatment of cells of a microorganism in an acidic solution.

9. The method according to claim 8, wherein said heat treatment in an acidic solution is heat treatment at 70°C or higher in a solution having a pH of 6 or less.

10. The method according to claim 8 or 9, wherein said microorganism is selected from the group consisting of Escherichia bacteria, Coryneform bacteria, Pantoea bacteria, Bacillus bacteria, yeast, lactic acid bacteria and acetic acid bacteria.

11. The method according to any one of claims 8 to 10, wherein said disease resistance enhancer is a foliar spray agent.

12. The method according to any one of claims 8 to 11, wherein said disease resistance enhancer further contains a metal.

13. The method according to claim 12, wherein said metal is zinc and/or copper.

14. The method according to any one of claims 8 to 13, wherein the acidic solution has a pH of 1 to 6.

## Patentansprüche

1. Verwendung einer Zusammensetzung, die einen Mikrobenzellextrakt umfasst, worin der Extrakt erhältlich ist durch Hitzebehandlung von Zellen eines Mikroorganismus in einer sauren Lösung, als Krankheitsresistenzverstärker für Pflanzen.

2. Verwendung gemäß Anspruch 1, worin die Hitzebehandlung in einer sauren Lösung eine Hitzebehandlung bei 70°C oder höher in einer Lösung mit einem pH Wert von 6 oder weniger ist.

3. Verwendung gemäß Anspruch 1 oder 2, worin der Mikroorganismus aus der Gruppe bestehend aus Escherichia-Bakterien, koryneformen Bakterien, Pantoea-Bakterien, Bacillus-Bakterien, Hefe, Milchsäurebakterien und Essigsäurebakterien ausgewählt wird.

4. Verwendung gemäß einem der Ansprüche 1 bis 3, worin der Krankheitsresistenzverstärker ein Sprühmittel für Blätter ist.

5. Verwendung gemäß einem der Ansprüche 1 bis 4, worin die Zusammensetzung weiterhin ein Metall enthält.

6. Verwendung gemäß Anspruch 5, worin das Metall Zink und/oder Kupfer ist.

7. Verwendung gemäß einem der Ansprüche 1 bis 6, worin die saure Lösung einen pH-Wert von 1 bis 6 hat.

8. Verfahren zur Kontrolle einer Pflanzenkrankheit, das die Behandlung einer Pflanze mit einem Krankheitsresistenzverstärker umfasst, der einen Mikrobenzellextrakt umfasst, worin der Extrakt erhältlich ist durch Hitzebehandlung von Zellen eines Mikroorganismus in einer sauren Lösung.

9. Verfahren gemäß Anspruch 8, worin die Hitzebehandlung in einer sauren Lösung eine Hitzebehandlung bei 70°C oder höher in einer Lösung mit einem pH-Wert von 6 oder weniger ist.

10. Verfahren gemäß Anspruch 8 oder 9, worin der Mikroorganismus aus der Gruppe bestehend aus Escherichia-Bakterien, koryneformen Bakterien, Pantoea-Bakterien, Bacillus-Bakterien, Hefe, Milchsäurebakterien und Essigsäurebakterien ausgewählt wird.

11. Verfahren gemäß einem der Ansprüche 8 bis 10, worin der Krankheitsresistenzverstärker ein Sprühmittel für Blätter ist.

12. Verfahren gemäß einem der Ansprüche 8 bis 11, worin der Krankheitsresistenzverstärker weiterhin ein Metall enthält.

13. Verfahren gemäß Anspruch 12, worin das Metall Zink und/oder Kupfer ist.

14. Verfahren gemäß einem der Ansprüche 8 bis 13, worin die saure Lösung einen pH-Wert von 1 bis 6 hat.

## Revendications

1. Utilisation d'une composition comprenant un extrait de cellule microbienne, dans laquelle ledit extrait peut être obtenu par un traitement thermique de cellules d'un micro-organisme dans une solution acide, en tant qu'un stimulateur de résistance à des maladies pour des plantes.

2. Utilisation selon la revendication 1, dans laquelle ledit traitement thermique dans une solution acide est du traitement thermique à 70 °C ou plus dans une solution ayant un pH de 6 ou moins.

3. Utilisation selon la revendication 1 ou 2, dans laquelle ledit micro-organisme est sélectionné dans le groupe consistant en des bactéries Escherichia, des bactéries Corynéformes, des bactéries Pantoea, des bactéries Bacillus, de la levure, des bactéries d'acide lactique et de bactéries d'acide acétique.

4. Utilisation selon l'une quelconque des revendications 1 à 3, dans laquelle ledit stimulateur de résistance à des maladies est un agent de pulvérisation foliaire.

5. Utilisation selon l'une quelconque des revendications 1 à 4, dans laquelle ladite composition contient en outre un métal.

6. Utilisation selon la revendication 5, dans laquelle ledit métal est du zinc et/ou du cuivre.

7. Utilisation selon l'une quelconque des revendications 1 à 6, dans laquelle la solution acide a un pH de 1 à 6.

8. Procédé pour lutter contre une maladie de plante comprenant le traitement d'une plante avec un stimulateur de résistance à des maladies comprenant un extrait de cellule microbienne, dans lequel ledit extrait peut être obtenu par traitement thermique de cellules d'un micro-organisme dans une 1solution acide.

9. Procédé selon la revendication 8, dans lequel ledit traitement thermique dans une solution acide est du traitement thermique à 70 °C ou plus dans une solution ayant un pH de 6 ou moins.

10. Procédé selon la revendication 8 ou 9, dans lequel ledit micro-organisme est sélectionné dans le groupe consistant en des bactéries Escherichia, des bactéries Corynéformes, des bactéries Pantoea, des bactéries Bacillus, de la levure, des bactéries d'acide lactique et de bactéries d'acide acétique.

11. Procédé selon l'une quelconque des revendications 8 à 10, dans lequel ledit stimulateur de résistance à des maladies est un agent de pulvérisation foliaire.

12. Procédé selon l'une quelconque des revendications 8 à 11, dans lequel ledit stimulateur de résistance à des maladies contient en outre un métal.

13. Procédé selon la revendication 12, dans lequel ledit métal est du zinc et/ou du cuivre.

14. Procédé selon l'une quelconque des revendications 8 à 13, dans lequel la solution acide a un pH de 1 à 6.
